# FASCICULE DE BREVET EUROPEEN

(11) **EP 1 993 823 B1**
(45) Date de publication et mention de la délivrance du brevet: **28.11.2018**
(21) Numéro de dépôt: 07718110.5
(22) Date de dépôt: 22.01.2007
(51) Int. Cl.: B32B 1/08, B32B 27/08, B32B 27/34, B32B 27/36, B32B 27/28, F16L 11/04, F16L 11/12

(54) **TUYAU FLEXIBLE EN POLYAMIDE POUR L AIR COMPRIME**
POLYAMIDSCHLAUCH FÜR DRUCKLUFT
POLYAMIDE HOSE FOR COMPRESSED AIR

(30) Priorité: 20.01.2006 FR 0600517; 13.04.2006 US 791820 P
(43) Date de publication de la demande: 26.11.2008
(60) Demande divisionnaire: 11178276.9
(73) Titulaire: ARKEMA FRANCE, 92700 Colombes (FR)
(72) Inventeur: BELLET, Gaëlle, F-27000 Evreux (FR); AMOUROUX, Nicolas, F-27300 Valailles (FR); MONTANARI, Thibaut, F-27300 Menneval (FR)
(74) Mandataire: Schaefer, Anne-Sophie
(86) Numéro de dépôt international: PCT/FR2007/000118
(87) Numéro de publication internationale: WO 2007/083041

(56) Documents cités:
- EP-A- 1 260 747
- EP-A1- 0 542 185
- EP-A1- 0 567 947
- EP-A2- 0 982 122
- WO-A-2006/037615
- WO-A1-03/064908
- FR-A- 2 812 928
- US-A- 5 478 620
- US-A1- 2003 005 973
- US-A1- 2004 096 615
- CHRISTOPH JAROSCHEK: "Das Ende des Biegemoduls", ZEITSCHRIFT KUNSTSTOFFTECHNIK, vol. 8, no. 5, 1 January 2012 (2012-01-01) , pages 515-524, XP055139198,

## Description

### Domaine de l'invention

La présente invention concerne des tuyaux flexibles en polyamide pour l'air comprimé. Ils sont utiles pour distribuer l'air comprimé à des outillages, des machines outils, divers dispositifs et aussi pour les circuits de freinage des véhicules de grande puissance.

### L'art antérieur et le problème technique

Le brevet US 6066377 décrit des tuyaux flexibles pour les circuits de freinage. Ces flexibles sont constitués d'une couche intérieure en polyamide 11 ou 12 (en contact avec l'air de freinage) et d'une couche extérieure en polyamide 11 ou 12 et entre ces couches il y a une ou deux couches de polyéthylène haute densité (HDPE) et éventuellement une tresse de renfort en polyester. Le HDPE doit être réticulé par irradiation pour que le tube ait une résistance mécanique en particulier à l'éclatement et il doit aussi contenir une polyoléfine fonctionnalisée pour créer une adhésion entre le polyamide et le HDPE. Les exemples ne sont pas reproductibles et conduisent à des résultats aléatoires. Les propriétés mécaniques du HDPE sont insuffisantes et fragilisent le tube.

La demande de brevet FR 2812928 décrit une tubulure stratifiée en polyamide pour frein à air comprimé formée de couches extérieure et intérieure de polyamide 11 ou 12, avec des couches médianes en polyamide 6 contenant en poids 14% d'un plastifiant (butylbenzenesulfonamide), 7% de caprolactame résiduel, 10% d'élastomère EPDM greffé par l'anhydride maléique et 5% de polyéthylène greffé par l'anhydride maléique. Les couches de polyamide 6 et de polyamide 11 ou 12 sont collées ensemble par une couche de liaison. La couche de liaison est de préférence un polyamide 6-12 ou une polyoléfine modifiée par un anhydride. Le plastifiant et le caprolactame résiduel des couches de PA 6 exsudent et provoquent une délamination des couches et une rigidification des couches de PA 6. Le tuyau ne présente plus de propriétés mécaniques suffisantes. De plus le polyamide 6 a une reprise d'humidité beaucoup plus importante que celle du PA 11 ou du PA 12 et donc ses propriétés mécaniques chutent fortement.

La demande de brevet GB 2367108 décrit une tubulure stratifiée en polyamide pour frein à air comprimé formée de couches extérieure et intérieure de polyamide 11 ou 12, avec des couches médianes en polyamide 6 ou 6.6 et une tresse de renfort disposée aussi à l'intérieur de la structure entre les couches de PA 11 ou PA 12.

La demande de brevet EP 1378696 décrit un tuyau flexible multicouche pour l'air comprimé comprenant :
une couche intérieure en contact avec l'air comprimé en polyamide choisi parmi le PA 11, le PA 12,
une couche extérieure en polyamide choisie parmi les mêmes produits que la couche intérieure et pouvant être identique ou différente,
au moins une couche intermédiaire disposée entre la couche intérieure et la couche extérieure choisie parmi les mélanges de polyamide et de polyoléfine à matrice polyamide, les copolymères à blocs polyamide et blocs polyether, les mélanges de polyamides et de copolymères à blocs polyamide et blocs polyether.

Une tresse de renfort peut être disposée entre la couche intérieure et la couche extérieure.

Ainsi l'art antérieur a décrit une tubulure stratifiée en polyamide pour frein à air comprimé formée de couches extérieure et intérieure de polyamide 11 ou 12, avec des couches intérieures en polymères autres que le PA 11 ou le PA 12. A l'intérieur de la structure entre les couches de PA 11 ou PA 12 on dispose soit une tresse de renfort soit un polymère réticulé soit une tresse de renfort et un polymère réticulé. Ces tubes sont fabriqués par coextrusion des différentes couches mais la présence de la tresse oblige à effectuer la coextrusion en plusieurs fois, De même le polymère réticulé doit être coextrudé à l'état non réticulé puis être réticulé ensuite ce qui ajoute une opération. On a maintenant trouvé qu'on pouvait remplacer la tresse par un polymère de haut module. Ce tuyau flexible peut aussi comprendre une ou plusieurs couches de polymère souple (polymère de bas module) de manière à conserver la souplesse du tuyau. Dans le présent texte "polymère de haut module" veut dire "polymère de haut module de flexion", c'est-à-dire ayant un module de flexion supérieur à 1100 MPa ; un "polymère de bas module" veut dire "polymère de bas module de flexion" et vise un polymère ayant un module de flexion inférieur à 500 MPa.

### Brève description de l'invention

La présente invention concerne un tuyau flexible multicouche pour l'air comprimé comprenant dans cet ordre:
une couche extérieure (1) en polyamide, une couche intermédiaire (2) d'un polymère souple,
une couche intérieure (3) d'un polymère de haut module,
la couche intérieure (3) étant en contact avec l'air comprimé.

Plus particulièrement, la présente invention se rapporte à un tuyau flexible multicouche pour l'air comprimé comprenant dans cet ordre:
- une couche extérieure (1) en polyamide,
- une couche intermédiaire (2) d'un polymère ayant un module de flexion inférieur à 500 MPa,
- une couche intérieure (3) d'un polymère ayant un module de flexion supérieur à 1100 MPa, la couche intérieure (3) étant en contact avec l'air comprimé.

Selon l'invention, le polyamide de la couche extérieure (1) est choisi parmi
- le PA 11,
- le PA 12,
- un polyamide A répondant à la formule X.Y/Z ou 6.Y2/Z dans laquelle :
   - X désigne les restes d'une diamine aliphatique ayant de 6 à 10 atomes de carbone,
   - Y désigne les restes d'un diacide carboxylique aliphatique ayant de 10 à 14 atomes de carbone,
   - Y2 désigne les restes d'un diacide carboxylique aliphatique ayant de 15 à 20 atomes de carbone,
      Z désigne au moins un motif choisi parmi les restes d'un lactame, les restes d'un alpha-oméga aminoacide carboxylique et le motif X1.Y1 dans lequel X1 désigne les restes d'une diamine aliphatique et Y1 désigne les restes d'un diacide carboxylique aliphatique,
   les rapports en poids Z/(X+Y+Z) et Z/(6+Y2+Z) étant compris entre 0 et 15%, et
- un polyamide B semi-aromatique qui peut notamment répondre à la formule X/Y,Ar dans laquelle :
   - Y désigne les restes d'une diamine aliphatique ayant de 8 à 20 atomes de carbone,
   - Ar désigne les restes d'un diacide carboxylique aromatique,
   - X désigne soit les restes de l'acide aminoundecanoïque NH₂-(CH₂)₁₀-COOH, du lactame 12 ou de l'aminoacide correspondant soit le motif Y,x reste de la condensation de la diamine avec un diacide aliphatique (x) ayant entre 8 et 20 atomes de carbone soit encore le motif Y,l reste de la condensation de la diamine avec l'acide isophtalique.

Selon une variante de cette première forme un liant peut être disposé entre au moins deux de ces couches. Selon une autre variante au moins l'une des couches contient un produit facilitant l'adhésion sur la couche adjacente. On ne sortirait pas du cadre de l'invention en utilisant une combinaison de ces deux variantes.

Selon une deuxième forme la présente invention concerne un tuyau flexible multicouche pour l'air comprimé comprenant dans cet ordre:
une couche extérieure (1) en polyamide, une couche (2) d'un polymère souple,
une couche intermédiaire (3) d'un polymère de haut module,
éventuellement une couche (4) d'un polymère souple,
une couche intérieure (5) choisie parmi les polyamides, les mélanges de polyamide et de polyoléfine à matrice polyamide, les copolymères à blocs polyamide et blocs polyether, les mélanges de polyamides et de copolymères à blocs polyamide et blocs polyether,
la couche intérieure (5) étant en contact avec l'air comprimé.

Ainsi, selon cette deuxième forme de l'invention, le tuyau décrit ci-dessus comprenant deux ou trois couches, peut en outre comprendre, à partir de la couche intérieure (3) du polymère ayant un module de flexion supérieur à 1100 MPa et dans cet ordre :
- éventuellement une couche (4) d'un polymère ayant un module de flexion inférieur à 500 MPa, et
- une couche intérieure (5) d'un polymère choisi parmi les polyamides, les mélanges de polyamide et de polyoléfine à matrice polyamide, les copolymères à blocs polyamide et blocs polyéther, et les mélanges de polyamides et de copolymères à blocs polyamide et blocs polyether, la couche intérieure (5) étant en contact avec l'air comprimé.

Selon une variante de cette deuxième forme un liant peut être disposé entre au moins deux de ces couches. Selon une autre variante au moins l'une des couches contient un produit facilitant l'adhésion sur la couche adjacente. On ne sortirait pas du cadre de l'invention en utilisant une combinaison de ces deux variantes.

### Description détaillée de l'invention

**S'agissant de la couche extérieure (1) en polyamide** on peut citer le PA 11 et le PA 12.

On peut encore citer le polyamide A de formule X.Y/ Z ou 6.Y2/ Z dans laquelle :
X désigne les restes d'une diamine aliphatique ayant de 6 à 10 atomes de carbone,
Y désigne les restes d'un diacide carboxylique aliphatique ayant de 10 à 14 atomes de carbone,
Y2 désigne les restes d'un diacide carboxylique aliphatique ayant de 15 à 20 atomes de carbone,
Z désigne au moins un motif choisi parmi les restes d'un lactame, les restes d'un alpha-oméga aminoacide carboxylique, le motif X1.Y1 dans lequel X1 désigne les restes d'une diamine aliphatique et Y1 désigne les restes d'un diacide carboxylique aliphatique,
les rapports en poids Z/(X+Y+Z) et Z/(6+Y2+Z) étant compris entre 0 et 15%.

On peut citer à titre d'exemple le PA 6.10 (motifs hexaméthylene diamine et acide sébacique), le PA 6.12 (motifs hexaméthylene diamine et acide dodécanedioique), le PA 6.14 (motifs hexaméthylene diamine et diacide C14), le PA 6.18 (motifs hexaméthylene diamine et diacide C18) et le PA 10.10 (motifs 1,10-décanediamine et acide sébacique).

De préférence, le polyamide A est choisi parmi PA6.14, PA6.18 et PA 10.10.

On peut encore citer un polyamide B semi-aromatique.

Le polyamide B peut en particulier répondre à la formule X/Y,Ar dans laquelle :
- Y désigne les restes d'une diamine aliphatique ayant de 8 à 20 atomes de carbone,
- Ar désigne les restes d'un diacide carboxylique aromatique,
- X désigne soit les restes de l'acide aminoundecanoïque NH₂-(CH₂)₁₀-COOH, du lactame 12 ou de l'aminoacide correspondant soit le motif Y,x reste de la condensation de la diamine avec un diacide aliphatique (x) ayant entre 8 et 20 atomes de carbone soit encore le motif Y,l reste de la condensation de la diamine avec l'acide isophtalique,

De préférence, le polyamide B désigne:
- le 11/10,T qui résulte de la condensation de l'acide aminoundecanoïque, de la 1,10-décanediamine et de l'acide téréphtalique,
- le 12/12,T qui résulte de la condensation du lactame 12, de la 1,12-dodécanediamine et de l'acide téréphtalique,
- le 10,10/10,T qui résulte de la condensation de l'acide sébacique, de la 1,10-décanediamine et de l'acide téréphtalique,
- le 10,1/10,T qui résulte de la condensation de l'acide isophtalique, de la 1,10-décanediamine et de l'acide téréphtalique.

Cette liste n'est pas exhaustive et on peut également mentionner les polyamides B semi-aromatiques PA 6,I/6,T, PA 6,6/6,I/6,T et PA 6/6,T.

La viscosité inhérente du polyamide de la couche extérieure (1) peut être comprise entre 1 et 2 et avantageusement entre 1,2 et 1,8. La viscosité inhérente est mesurée à 20°C pour une concentration de 0,5% dans le méta-cresol. Le polyamide de la couche extérieure (1) peut contenir de 0 à 30% en poids d'au moins un produit choisi parmi les plastifiants et les modifiants choc pour respectivement 100 à 70% de polyamide. Ce polyamide peut contenir les additifs habituels anti UV, stabilisants, antioxydants, ignifugeants.

Le polyamide de la couche extérieure (1) peut contenir au moins un produit choisi parmi les plastifiants, les modifiants choc et les polyamides éventuellement catalysés.

**S'agissant du plastifiant** il est choisi parmi les dérivés de benzène sulfonamide, tels que le n-butyl benzène sulfonamide (BBSA), l'éthyl toluène sulfonamide ou le N-cyclohexyl toluène sulfonamide; les esters d'acides hydroxy-benzoïques, tels que le parahydroxybenzoate d'éthyl-2 hexyle et le parahydroxybenzoate de décyl-2 hexyle ; les esters ou éthers du tétrahydrofurfuryl alcool, comme l'oligoéthylèneoxytétrahydrofurfurylalcool ; les esters de l'acide citrique ou de l'acide hydroxy-malonique, tels que l'oligoéthylèneoxy malonate. On peut citer aussi le decyl héxyl parahydroxybenzoate et l'éthyl héxyl parahydroxybenzoate. Un plastifiant particulièrement préféré est le n-butyl benzène sulfonamide (BBSA).

**S'agissant du modifiant choc** on peut citer par exemple les polyoléfines, les polyoléfines réticulées, les élastomères EPR, EPDM, SBS et SEBS ces élastomères pouvant être greffés pour faciliter leur compatibilisation avec le polyamide, les copolymères à blocs polyamides et blocs polyethers. Ces copolymères à blocs polyamides et blocs polyethers sont connus en eux mêmes, ils sont aussi désignés par l'appellation PEBA (polyéther bloc amide) et vendus par la demanderesse sous le nom PEBAX®. On peut encore citer les élastomères acryliques par exemple ceux du type NBR, HNBR, X-NBR. Les polyoléfines utiles comme modifiant choc sont par exemple les copolymères éthylène-(meth)acrylate d'alkyle-anhydride maléique (ou méthacrylate de glycidyle). Ils sont vendus par la demanderesse sous le nom de Lotader®.

**S'agissant du polyamide éventuellement catalysé** c'est un polyamide différent du polyamide de base de la couche (1). Avantageusement c'est un polyamide contenant un catalyseur de polycondensation tel que un acide minéral ou organique, par exemple de l'acide phosphorique. Le catalyseur peut être ajouté dans le polyamide après sa préparation par un procédé quelconque ou, tout simplement et c'est ce que l'on préfère, être le reste du catalyseur utilisé pour sa préparation. Des réactions de polymérisation et/ou dépolymerisation pourront avoir très substantiellement lieu au cours du mélange de ce polyamide catalysé et du polyamide de la couche extérieure. La quantité de catalyseur peut être comprise entre 5 ppm et 15000 ppm
d'acide phosphorique par rapport au polyamide catalysé. La quantité de catalyseur peut être jusqu'à 3000 ppm et avantageusement entre 50 et 1000 ppm. Pour d'autres catalyseurs, par exemple l'acide borique, les teneurs seront différentes et peuvent être choisies de façon appropriée selon les techniques habituelles de la polycondensation des polyamides.

La proportion de plastifiant peut être comprise (en poids) entre 5 et 20% (avantageusement entre 10 et 15%), le modifiant choc entre 0 et 5%, le polyamide éventuellement catalysé entre 0 et 5% et le complément à 100% en polyamide de la couche extérieure.

Avantageusement le polyamide de la couche extérieure est le PA 12. Si on ajoute du polyamide éventuellement catalysé dans ce polyamide alors ce polyamide c'est avantageusement du PA 11.

S'agissant de la préparation des compositions de la couche extérieure elles peuvent être préparées par mélange à l'état fondu des constituants selon les techniques habituelles des matières thermoplastiques. La couche extérieure peut aussi comprendre des additifs habituels des polyamides tels que des stabilisants UV, des antioxydants, des pigments, des ignifugeants.

**S'agissant de la couche intérieure (5)** et d'abord des polyamides, ils peuvent être choisis parmi ceux de la couche extérieure (1). Le polyamide de cette couche (5) peut être identique ou différent de celui de la couche (1). Le polyamide de la couche (5) peut être aussi le PA 6 ou le PA 6.6.

Quant aux mélanges de polyamide et de polyoléfine à matrice polyamide ce sont avantageusement des mélanges de polyamide et de polyoléfine à matrice polyamide et phase dispersée polyoléfine. Dans les mélanges de polyamide et de polyoléfine à matrice polyamide et phase dispersée polyoléfine le terme polyoléfine désigne aussi bien des homo polymères que des copolymères, des thermoplastiques aussi bien que des élastomères. C'est par exemple des copolymères de l'éthylène et d'une alphaoléfine. Ces polyoléfines peuvent être des PE, des EPR des EPDM. Elles peuvent être fonctionnalisées en tout ou partie. On entend aussi par polyéthylène les copolymères de l'éthylène et d'un (meth)acrylate d'alkyle. Ces copolymères pouvant aussi contenir des fonctions, par exemple acide ou anhydride d'acide ou epoxy. La phase dispersée peut être un mélange d'une ou plusieurs polyoléfines non fonctionnalisées et d'une ou plusieurs polyoléfines fonctionnalisées. Avantageusement la matrice polyamide représente 50 à 85% en poids pour respectivement 50 à 15% de phase dispersée. De préférence la matrice polyamide représente 55 à 80% en poids pour respectivement 45 à 20% de phase dispersée. Dans ces mélanges de polyamide et de polyoléfine à matrice polyamide le polyamide est de préférence du PA 6.

Quant aux copolymères à blocs polyamide et blocs polyether, ils résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines.
3) Séquences polyamides à bouts de chaînes dicarboxyliques avec des polyétherdiols, les produits obtenus étant, dans ce cas particulier, des polyétheresteramides. On utilise avantageusement ces copolymères.

Quant aux mélanges de polyamides et de copolymères à blocs polyamide et blocs polyether ceci revient à remplacer une partie du polyamide par un copolymère à blocs polyamide et blocs polyether, c'est à dire en utilisant un mélange comprenant au moins un des polyamides précédents cités pour la couche (5) et au moins un copolymère à blocs polyamide et blocs polyether. On peut citer par exemple les mélanges de (i) PA 6 et (ii) copolymère à blocs PA 6 et blocs PTMG, des mélanges de (i) PA 6 et (ii) copolymère à blocs PA 12 et blocs PTMG et des mélanges de (i) PA 12 et (ii) copolymère à blocs PA 6 ou PA 12 et blocs PTMG.

**S'agissant des couches intermédiaires (2) et (4) de polymère souple,** on peut citer à titre d'exemple les polymères de module de flexion inférieur à 500 MPa et avantageusement compris entre 80 et 300 MPa. A titre d'exemple, on peut citer les copolymères de l'éthylène et les copolymères de propylène.

**S'agissant de la couche intérieure (3) de polymère** ayant un module de flexion supérieur à 1100 MPa, on peut citer un polyamide, le polycarbonate (PC), le polysulfure de phénylène (PPS) et le polyoxyde de phénylène (PPO). Avantageusement, le polyamide de la couche intérieure (3) est choisi parmi PA 6, PA6.6, PA 6.10, PA 6.12, un polyamide aromatique et un polyamide semi-aromatique tel que ceux visés sous le terme de polyamide B précédemment décrit.

Plus préférentiellement, le polymère ayant un module de flexion supérieur à 1100 MPa de la couche intérieure (3) est choisi parmi le polycarbonate (PC), le polyoxyde de phénylène (PPO), un polyamide aromatique et un polyamide semi-aromatique.

**S'agissant de la couche éventuelle de liant,** on désigne ainsi tout produit qui permet l'adhésion des couches. Le liant peut être une polyoléfine fonctionnalisée portant une fonction acide carboxylique ou anhydride d'acide carboxylique. Elle peut être mélangée avec une polyoléfine non fonctionnalisée. Le liant peut être aussi un copolyamide.

S'agissant du liant en copolyamide, les copolyamides utilisables dans la présente invention ont une température de fusion (Norme DIN 53736B) comprise entre 60 et 200°C et leur viscosité relative en solution peut être comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux des couches qu'on veut faire adhérer.

Les copolyamides proviennent, par exemple, de la condensation d'acides alpha-oméga aminocarboxyliques de lactames ou de diacides carboxyliques et diamines.

Selon un premier type les copolyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne pouvant être par exemple une monoamine ou une diamine ou un monoacide carboxylique ou un diacide carboxylique. Parmi les limiteurs de chaîne on peut citer notamment l'acide adipique, l'acide azélaïque, l'acide stéarique, la dodecanediamine. Les copolyamides de ce premier type peuvent comprendre aussi des motifs qui sont des restes de diamines et diacides carboxyliques.

A titre d'exemple d'acide dicarboxylique on peut citer l'acide adipique, l'acide nonanedioïque, l'acide sébacique et l'acide dodécanédioïque.

A titre d'exemple d'acide alpha oméga aminocarboxylique on peut citer l'acide aminocaproïque, l'acide aminoundécanoïque et l'acide aminododécanoïque.

A titre d'exemple de lactame on peut citer le caprolactame et le lauryllactame.

Selon un deuxième type les copolyamides résultent de la condensation d'au moins un acide alpha-oméga aminocarboxylique (ou un lactame), au moins une diamine et au moins un diacide carboxylique. L'acide alpha oméga aminocarboxylique, le lactame et le diacide carboxylique peuvent être choisis parmi ceux cités plus haut. La diamine peut être une diamine aliphatique branchée, linéaire ou cyclique ou encore arylique. A titre d'exemples on peut citer l'hexaméthylènediamine, la pipérazine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM). Les procédés de fabrication des copolyamides sont connus de l'art antérieur et ces copolyamides peuvent être fabriqués par polycondensation, par exemple en autoclave.

Selon un troisième type les copolyamides sont un mélange d'un copolyamide 6/12 riche en 6 et d'un copolyamide 6/12 riche en 12. S'agissant du mélange de copolyamides 6/12 l'un comprenant en poids plus de 6 que de 12 et l'autre plus de 12 que de 6, le copolyamide 6/12 résulte de la condensation du caprolactame avec le lauryllactame. Il est clair que "6" désigne les motifs dérivés du caprolactame et "12" désigne les motifs dérivés du lauryllactame. On ne sortirait pas du cadre de l'invention si le caprolactame était remplacé en tout ou partie par l'acide aminocaproïque, de même pour le lauryllactame qui peut être remplacé par l'acide aminododecanoïque. Ces copolyamides peuvent comprendre d'autres motifs pourvu que les rapports des proportions de 6 et de 12 soient respectées.

Avantageusement le copolyamide riche en 6 comprend 60 à 90% en poids de 6 pour respectivement 40 à 10% de 12.

Avantageusement le copolyamide riche en 12 comprend 60 à 90% en poids de 12 pour respectivement 40 à 10% de 6.

Quant aux proportions du copolyamide riche en 6 et du copolyamide riche en 12 elles peuvent être, en poids, de 40/60 à 60/40 et de préférence 50/50.

Ces mélanges de copolyamides peuvent aussi comprendre jusqu'à 30 parties en poids d'autres (co)polyamides ou de polyoléfines greffées pour 100 parties des copolyamides riches en 6 et riches en 12.

Ces copolyamides ont une température de fusion (Norme DIN 53736B) comprise entre 60 et 200°C et leur viscosité relative en solution peut être comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux des couches adjacentes. Ces produits se fabriquent par les techniques habituelles des polyamides. Des procédés sont décrits dans les brevets US 4424864, US 4483975, US 4774139, US 5459230, US 5489667, US 5750232 et US 5254641.

Selon une autre variante au moins l'une des couches contient un produit facilitant l'adhésion sur la couche adjacente. Ce produit peut être l'un des liants qu'on vient de définir ci dessus.

Le diamètre intérieur des tuyaux de la présente invention peut être compris entre 4 et 30 mm et avantageusement entre 5 et 25 mm. Leur épaisseur peut être comprise entre 0,5 et 5 mm.

Ces tuyaux sont fabriqués par coextrusion. Dans ceux qui contiennent une tresse de renfort elle est disposée après avoir extrudé les couches les plus à l'intérieur puis au dessus de cette tresse on vient coextruder les autres couches par un dispositif dit "en tête d'équerre". On peut mettre plusieurs couches intermédiaires, une ou plusieurs tresses. Toutes ces techniques sont connues en elles-mêmes.

Les tuyaux de la présente invention ont une très bonne résistance chimique de leur couche extérieure en particulier au chlorure de zinc. Ils ont aussi une très bonne tenue mécanique en particulier permettant leur raccordement à l'aide de connecteurs à griffes.

## Revendications

1. Tuyau flexible multicouche pour l'air comprimé comprenant dans cet ordre :
- une couche extérieure (1) en polyamide,
- une couche intermédiaire (2) d'un polymère ayant un module de flexion inférieur à 500 MPa en copolymère d'éthylène ou en copolymère de propylène, et
- une couche intérieure (3) d'un polymère ayant un module de flexion supérieur à 1100 MPa, choisi parmi le polycarbonate (PC), le polysulfure de phénylène (PPS), le polyoxyde de phénylène (PPO) et un polyamide, ledit polyamide étant lui-même choisi parmi le PA 6, le PA 6.6, le PA 6.10, le PA 6.12, un polyamide aromatique et un polyamide semi-aromatique, la couche intérieure (3) étant en contact avec l'air comprimé,
le polyamide de la couche extérieure (1) étant choisi parmi :
- le PA 11,
- le PA 12,
- un polyamide A répondant à la formule X.Y/Z ou 6.Y2/Z dans laquelle :
• X désigne les restes d'une diamine aliphatique ayant de 6 à 10 atomes de carbone,
• Y désigne les restes d'un diacide carboxylique aliphatique ayant de 10 à 14 atomes de carbone,
• Y2 désigne les restes d'un diacide carboxylique aliphatique ayant de 15 à 20 atomes de carbone,
• Z désigne au moins un motif choisi parmi les restes d'un lactame, les restes d'un alpha-oméga aminoacide carboxylique et le motif X1.Y1 dans lequel X1 désigne les restes d'une diamine aliphatique et Y1 désigne les restes d'un diacide carboxylique aliphatique,
les rapports en poids Z/(X+Y+Z) et Z/(6+Y2+Z) étant compris entre 0 et 15%, et
- un polyamide B semi-aromatique.

2. Tuyau selon la revendication 1, **caractérisé en ce que** le polyamide A est choisi parmi PA 6.14, PA 6.18 et PA 10.10.

3. Tuyau selon la revendication 1, **caractérisé en ce que** le polyamide B répond à la formule X/Y,Ar dans laquelle :
• Y désigne les restes d'une diamine aliphatique ayant de 8 à 20 atomes de carbone,
• Ar désigne les restes d'un diacide carboxylique aromatique,
• X désigne soit les restes de l'acide aminoundecanoïque NH₂-(CH₂)₁₀-COOH, du lactame 12 ou de l'aminoacide correspondant soit le motif Y,x reste de la condensation de la diamine avec un diacide aliphatique (x) ayant entre 8 et 20 atomes de carbone soit encore le motif Y,l reste de la condensation de la diamine avec l'acide isophtalique.

4. Tuyau selon la revendication 1, **caractérisé en ce que** le polyamide B est choisi parmi PA6,I/6,T, PA 6,6/6,I/6,T, PA 6/6,T, PA 11/10,T, PA 12/12,T, PA 10,10/10,T et PA 10,I/10,T.

5. Tuyau selon l'une quelconque des revendications 1 à 4, **caractérisé en ce qu'**il comprend en outre, à partir de la couche intérieure (3), du polymère ayant un module de flexion supérieur à 1100 MPa, et dans cet ordre :
- éventuellement une couche (4) d'un polymère ayant un module de flexion inférieur à 500 MPa, en copolymère d'éthylène ou en copolymère de propylène, et
- une couche intérieure (5) d'un polymère choisi parmi les polyamides, les mélanges de polyamide et de polyoléfine à matrice polyamide, les copolymères à blocs polyamide et blocs polyéther, et les mélanges de polyamides et de copolymères à blocs polyamide et blocs polyéther, la couche intérieure (5) étant en contact avec l'air comprimé.

6. Tuyau selon l'une quelconque des revendications 1 à 5, **caractérisé en ce qu'**une couche de liant est disposée entre au moins deux des couches.

7. Tuyau selon l'une quelconque des revendications 1 à 6, **caractérisé en ce qu'**au moins l'une des couches contient un produit facilitant l'adhésion sur la couche adjacente.

8. Utilisation d'un tuyau selon l'une quelconque des revendications 1 à 7 pour distribuer l'air comprimé à des outillages, des machines outils, divers dispositifs et pour les circuits de freinage des véhicules de grande puissance.

## Patentansprüche

1. Flexibler mehrschichtiger Schlauch für Druckluft, umfassend in dieser Reihenfolge:
- eine äußere Schicht (1) aus Polyamid,
- eine Zwischenschicht (2) aus einem Polymer mit einem Modul zur Biegung von weniger als 500 MPa aus Ethylen-Copolymer oder Propylen-Copolymer, und
- eine Zwischenschicht (3) aus einem Polymer mit einem Modul zur Biegung von mehr als 1100 MPa, welches ausgewählt ist aus Polycarbonat (PC), Polyphenylensulfid (PPS), Polyphenylenoxid (PPO) und einem Polyamid, wobei dieses Polyamid selbst ausgewählt ist aus PA 6, PA 6.6, PA 6.10, PA 6.12, einem aromatischen Polyamid und einem semi-aromatischen Polyamid, wobei die innere Schicht (3) mit der Druckluft in Kontakt ist,
wobei das Polyamid der äußeren Schicht (1) ausgewählt ist aus:
- PA 11,
- PA 12,
- einem Polyamid A entsprechend der Formel X.Y/Z oder 6.Y2/Z, in welcher:
• X die Reste eines aliphatischen Diamins mit 6 bis 10 Kohlenstoffatomen bezeichnet,
• Y die Reste einer aliphatischen Dicarbonsäure mit 10 bis 14 Kohlenstoffatomen bezeichnet,
• Y2 die Reste einer aliphatischen Dicarbonsäure mit 15 bis 20 Kohlenstoffatomen bezeichnet,
• Z mindestens eine Einheit bezeichnet, welche ausgewählt ist aus den Resten eines Lactams, den Resten einer Alpha-Omega-Aminocarbonsäure und der Einheit X1.Y1, in welcher X1 die Reste eines aliphatischen Diamins und Y1 die Reste einer aliphatischen Dicarbonsäure bezeichnet,
wobei die Gewichtsverhältnisse Z/(X+Y+Z) und Z/(6+Y2+Z) zwischen 0 und 15 % liegen, und
- einem semi-aromatischen Polyamid B.

2. Schlauch nach Anspruch 1, **dadurch gekennzeichnet, dass** das Polyamid A ausgewählt ist aus PA 6.14, PA 6.18 und PA 10.10.

3. Schlauch nach Anspruch 1, **dadurch gekennzeichnet, dass** das Polyamid B der Formel X/Y,Ar entspricht, in welcher:
• Y die Reste eines aliphatischen Diamins mit 8 bis 20 Kohlenstoffatomen bezeichnet,
• Ar die Reste einer aromatischen Dicarbonsäure bezeichnet,
• X entweder die Reste der Aminoundecansäure NH₂-(CH₂)₁₀-COOH, des Lactams 12 oder der entsprechenden Aminosäure, oder die Einheit Y,x Rest aus der Kondensation des Diamins mit einer aliphatischen Disäure (x) mit von 8 bis 20 Kohlenstoffatomen oder aber die Einheit Y,l Rest aus der Kondensation des Diamins mit isophtalischer Säure bezeichnet.

4. Schlauch nach Anspruch 1, **dadurch gekennzeichnet, dass** das Polyamid B ausgewählt ist aus PA6,I/6,T, PA 6,6/6,I/6,T, PA 6/6,T, PA 11/10,T, PA 12/12,T, PA 10,10/10,T und PA 10,I/10,T.

5. Schlauch nach einem der Ansprüche 1 bis 4, **dadurch gekennzeichnet, dass** dieser zudem, ausgehend von der inneren Schicht (3), des Polymers mit einem Modul zur Biegung von mehr als 1100 MPa, in dieser Reihenfolge Folgendes umfasst:
- gegebenenfalls eine Schicht (4) aus einem Polymer mit einem Modul zur Biegung von weniger als 500 MPa aus Ethylen-Copolymer oder Propylen-Copolymer, und
- eine innere Schicht (5) aus einem Polymer, welches ausgewählt ist aus Polyamiden, Mischungen aus Polyamid und Polyolefin mit Polyamidmatrix, Copolymeren mit Polyamidblöcken oder Polyetherblöcken, und Mischungen aus Polyamiden und Copolymeren mit Polyamidblöcken und Polyetherblöcken, wobei die innere Schicht (5) mit der Druckluft in Kontakt ist.

6. Schlauch nach einem der Ansprüche 1 bis 5, **dadurch gekennzeichnet, dass** eine Schicht mit Bindemittel zwischen mindestens zwei der Schichten angeordnet ist.

7. Schlauch nach einem der Ansprüche 1 bis 6, **dadurch gekennzeichnet, dass** mindestens eine der Schichten ein Produkt zur Erleichterung der Haftung an der angrenzenden Schicht enthält.

8. Verwendung eines Schlauchs nach einem der Ansprüche 1 bis 7 zum Verteilen der Druckluft für Werkzeuge, Werkzeugmaschinen, verschiedene Vorrichtungen und für Bremsanlagen für Hochleistungsfahrzeuge.

## Claims

1. A flexible multilayer hose for compressed air comprising, in the following order:
- an outer layer (1) made from polyamide,
- an intermediate layer (2) made from a polymer having a flexural modulus of less than 500 MPa made from an ethylene copolymer or a propylene copolymer, and
- an inner layer (3) of a polymer having a flexural modulus greater than 1100 MPa, chosen from among polycarbonate (PC), phenylene polysulfide (PPS), phenylene polyoxide (PPO) and a polyamide, said polyamide in turn being chosen from among PA 6, PA 6.6, PA 6.10, PA 6.12, an aromatic polyamide and a semi-aromatic polyamide, the inner layer (3) being in contact with compressed air,
the polyamide of the outer layer (1) being chosen from among:
- PA 11,
- PA 12,
- a polyamide A satisfying formula X.Y/Z or 6.Y2/Z in which:
- X refers to an aliphatic diamine group having 6 to 10 carbon atoms,
- Y refers to an aliphatic carboxylic diacid group having 10 to 14 carbon atoms,
- Y2 refers to an aliphatic carboxylic diacid group having 15 to 20 carbon atoms,
- Z refers to at least one pattern chosen from among a lactam group, a carboxylic alpha-omega amino acid group and the X1.Y1 pattern in which X1 refers to an aliphatic diamine group and Y1 refers to an aliphatic carboxylic diacid group, the weight ratios Z/(X+Y+Z) and Z/(6+Y2+Z) being between 0 and 15 %, and
- a semi-aromatic polyamide B.

2. The hose according to claim 1, **characterized in that** the polyamide A is chosen from among PA 6.14, PA 6.18 and PA 10.10.

3. The hose according to claim 1, **characterized in that** the polyamide B satisfies formula X/Y,Ar, wherein:
• Y refers to an aliphatic diamine group having 8 to 20 carbon atoms,
• Ar refers to an aromatic carboxylic diacid group,
• X refers either to the NH₂-(CH₂)₁₀-COOH aminoundecanoic acid group, the lactam 12 or the corresponding amino acid, or to the Y,x pattern, group from the condensation of the diamine with a (x) aliphatic diacid having between 8 and 20 carbon atoms or to the Y,I pattern group from the condensation of the diamine with the isophthalic acid.

4. The hose according to claim 1, **characterized in that** the polyamide B is chosen from among PA6,I/6,T, PA 6.6/6,I/6,T, PA 6/6,T, PA 11/10,T, PA 12/12,T, PA 10.10/10,T and PA 10,I/10,T.

5. The hose according to any one of claims 1 to 4, **characterized in that** it further comprises, from the inner layer (3), polymer having a flexural modulus greater than 1100 MPa, and in the following order:
- optionally a layer (4) of a polymer having a flexural modulus of less than 500 MPa made from an ethylene copolymer or a propylene copolymer, and
- an inner layer (5) of a polymer chosen from among polyamides, mixtures of polyamide and polyolefin with polyamide matrix, copolymers with polyamide blocks and polyether blocks, and mixtures of polyamides and copolymers with polyamide blocks and polyether blocks, the inner layer (5) being in contact with compressed air.

6. The hose according to any one of claims 1 to 5, **characterized in that** a layer of binder is positioned between at least two of the layers.

7. The hose according to any one of claims 1 to 6, **characterized in that** at least one of the layers contains a product facilitating the adhesion on the adjacent layer.

8. A use of a hose according to any one of claims 1 to 7 to distribute compressed air to tools, machine tools, various devices, and for braking circuits of high-powered vehicles.
